# EUROPÄISCHE PATENTSCHRIFT

(11) **EP 2 404 962 B1**
(45) Veröffentlichungstag und Bekanntmachung des Hinweises auf die Patenterteilung: **16.01.2013**
(21) Anmeldenummer: 11170929.1
(22) Anmeldetag: 22.06.2011
(51) Int. Cl.: C08K 5/10, C08K 5/42, C08J 3/18, C08L 27/06

(54) **Weichmacherzubereitungen mit guten Geliereigenschaften**
Softener preparations with good gelling characteristics
Préparations d'adoucissant dotées de bonnes propriétés de gélification

(30) Priorität: 05.07.2010 EP 10168454
(43) Veröffentlichungstag der Anmeldung: 11.01.2012
(73) Patentinhaber: LANXESS Deutschland GmbH, 51369 Leverkusen (DE)
(72) Erfinder: Facklam, Thomas, 51375 Leverkusen (DE); Job, Karsten, 51375 Leverkusen (DE)

(56) Entgegenhaltungen:
- EP-A1- 1 873 198
- EP-A2- 2 039 718

## Beschreibung

Die vorliegende Erfindung betrifft Weichmacherzubereitungen auf Basis von Benzoesäureester mit einwertigen Alkoholen und Arylester der Alkansulfonsäuren und ihre Verwendung als Weichmacher in Kunststoffen.

Zur Verarbeitung von Kunststoffen wie beispielsweise Polyvinylchlorid (PVC) werden seit Jahrzehnten Weichmacher eingesetzt. Weichmacher sind in der Polymerverarbeitung eingesetzte Additive, die die Verarbeitbarkeit, die Flexibilität und die Dehnbarkeit verbessern. Die zur Erzeugung von Weich-PVC eingesetzten Weichmacher sind überwiegend Phthalsäureester wie die Allzweckprodukte Di-2-ethylhexylphthalat (DEHP), Diisononylphthalat (DINP) und Diisodecylphthalat (DIDP). Zur Verbesserung der Verarbeitungsprozesse in Hinblick auf Geschwindigkeit oder Energieeinsparung können schnell gelierende Weichmacher wie beispielsweise die kurzkettigen Phthalate Dibutylphthalat (DBP), Diisobutylphthalat (DiBP) und Benzyl-n-butylphthalat (BBP) zugesetzt werden.

Die Verwendung von Phthalaten generell und insbesondere die Verwendung der schnell gelierenden Phthalatester auf Basis von Alkoholen mit einer Länge der C-Kette ohne Verzweigung von 3 bis 6 wird aufgrund gesetzlicher Rahmenbedingungen immer weiter eingeschränkt. Nach der in der Europäischen Union gültigen Richtlinie 2005/84/EG dürfen die Weichmacher Diisononylphthalat (DINP), Diisodecylphthalat (DIDP) und Di-n-octylphthalat (DnOP) nicht mehr zur Herstellung von Spielzeug und Babyartikeln, die von Kindern in den Mund genommen werden können, in Konzentrationen größer 0, 1 % verwendet werden. Der Einsatz von Di-2-ethylhexylphthalat (DEHP), Dibutylphthalat (DBP) und Benzylbutylphthalat (BBP) ist in Konzentrationen größer 0,1 % in Spielzeug und Babyartikeln verboten. Die Phthalate Dibutylphthalat (DBP), Diisobutylphthalat (DiBP), Benzylbutylphthalat (BBP) und Di(2-ethylhexyl)phthalat (DEHP) wurden von der Europäischen Chemikalienagentur (ECHA) in die Liste der Kandidaten der besonders Besorgnis erregenden Stoffe (SVHC) aufgenommen.

Im Hinblick auf die oben erwähnte schnelle Gelierung besteht ein Bedarf an einem phthalatfreien Ersatzstoff für die schnell gelierenden Phthalate und insbesondere für deren Abmischungen mit Allzweckweichmachern.

In EP 1 983 024 A1 werden Benzyl-alkyl-trimellitate als schnell gelierende Estermischungen vorgeschlagen. Die Estermischungen wurden direkt in einer Eintopfreaktion gewonnen. Eine Untersuchung der Einzelkomponenten fand nicht statt; besondere Vorteile der Mischung über die Einzelkomponenten sind nicht beschrieben.

In EP 2 039 718 A2 werden schnell gelierende Weichmachermischungen auf Basis von Alkylsulfonsäurearylester und Dioldibenzoaten beschrieben. Die besondere Eigenschaft dieser Weichmachermischungen ist die niedrige Flüchtigkeit. Die Zugabe der schnell gelierenden Dioldibenzoate zum Alkylsulfonsäurearylester führt gemäß den Beispielen zu einer schnelleren Gelierzeit als der Alkylsulfonsäurearylester alleine; eine kürzere Gelierzeit als die Einzelkomponenten, also hier als das Dioldibenzoat konnten nicht erzielt werden.

In EP 2 145 914 A1 wird die Verbesserung der Geliereigenschaften von Weichmachern durch die Zugabe von Triacetin beschrieben.

WO 2006077131 A1 beschreibt C9- bis C10-Alkylbenzoate als wenig flüchtige Viskositätserniedriger von PVC-Plastisolen mit Standardweichmachern. Eine allgemein erwartete Erniedrigung der Lösetemperatur der Plastisolstandardrezeptur durch den Zusatz der schneller gelierenden Alkylbenzoate wird beschrieben; eine signifikante Erniedrigung auf einen Wert unterhalb der Ergebnisse der Einzelkomponenten wird nicht beschrieben.

In WO 97/39060 A1 wird der Einsatz von Alkylbenzoaten als Verarbeitungshilfsmittel in PVC-Pasten mit Standardweichmachern angeregt, wobei hervorgehoben wird, dass die Alkylbenzoate die Geliereigenschaften nicht materiell beeinflussen.

In den Patenten EP 1 415 978 A1 und EP 1 354 867 A2 wird der Einsatz von Gemischen isomerer Benzoesäuredecylester und isomerer Benzoesäurenonylester mit Phthalsäuredialkylester, Adipinsäuredialkylester oder Cyclohexandicarbonsäureester vorgeschlagen ohne dass ein schnelles Gelierverhalten der Gemische über das Maß der Einzelkomponenten heraus gefunden werden konnte.

In WO 2009085453 A2 werden zur Beschleunigung der Verarbeitung der Langsamgelierer Cyclohexancarbonsäureester schnell gelierende Nicht-Phthalat-Weichmacher empfohlen mit dem erwarteten Ergebnis einer angemessenen Beschleunigung.

Mischungen von Benzoesäureester sind schon lange bekannt. In DE 1 962 500 A1 zeigen Mischungen auf Basis von Benzoesäurealkylester mit Bernsteinsäurediestern hervorragende Fleckenbeständigkeiten des Weich-PVC-Endartikels.

Die im Stand der Technik beschriebenen Zusammensetzungen erfüllen jedoch das Erfordernis im Hinblick auf eine schnelle und/oder eine energiesparende Verarbeitung nicht in zufrieden stellendem Maße.

Die Aufgabe der vorliegenden Erfindung bestand deshalb darin, neue phthalatfreie Weichmacherformulierungen mit guten Geliereigenschaften für Kunststoffe, insbesondere PVC zu finden, die eine schnelle und/oder eine energiesparende Verarbeitung ermöglichen.

Überraschend wurde nun gefunden, dass phthalatfreie Weichmacherzubereitungen eines Gemisches aus wenigstens einem Alkylsulfonsäurearylester und wenigstem einem Ester der Benzoesäure mit einwertigen C9- und C10-Alkoholen unerwartet schnell gelieren und geringere Gelierzeiten als beide Einzelkomponenten alleine aufweisen und geringere Gelierzeiten aufweisen, als die Linearbeziehung der Einzelkomponenten erwarten lässt.

Gegenstand der Erfindung sind deshalb phthalatfreie Weichmacherzubereitungen enthaltend
a) 5-95 Gew.-% eines Alkylsulfonsäurearylesters der Formel R¹-SO₂-O-R² und
b) 95-5 Gew.-% eines Benzoesäureesters mit einem einwertigen Alkohol der Formel R³-C(O)O-R⁴
wobei die Summe der Gewichtsprozente der Komponenten 100 % ergibt und worin
R¹ für einen geradkettigen oder verzweigten C10 bis C21-Alkylrest steht,
R² für einen gegebenenfalls mit C1- bis C4-Alkyl-substituierten Phenylrest steht,
R³ für einen Phenylrest steht und
R⁴ für einen geradkettigen oder verzweigten C9- und C10-Alkylrest steht.

Zur Klarstellung sei angemerkt, dass vom Rahmen der Erfindung alle nachfolgend aufgeführten, allgemeinen oder in Vorzugsbereichen genannten Definitionen und Parameter in beliebigen Kombinationen umfasst sind.

In einer bevorzugten Ausführung liegt der Gehalt des als Komponente a) einzusetzenden Alkylsulfonsäurearylesters zwischen 20 und 80 Gew.-% besonders bevorzugt zwischen 33 und 67 Gew.-%, ganz besonders bevorzugt zwischen 51 und 65 Gew.-% Alkylsulfonsäureester (Endwerte eingeschlossen).

Entsprechend bevorzugter Gehalt an Komponente b) liegt zwischen 80 und 20 Gew.-%, besonders bevorzugt zwischen 67 und 33 %, ganz besonders bevorzugt zwischen 49 und 35 % (Endwerte jeweils eingeschlossen).

In einer bevorzugten Ausführung steht der Rest R² für einen unsubstituierten Phenylrest, sodass es sich bei dem Alkylsulfonsäurearylester der Formel R¹-SO₂-OR² bevorzugt um Alkylsulfonsäurephenylester, also um Phenylester von Alkansulfonsäuren handelt, insbesondere bevorzugt das Produkt Mesamoll® der Lanxess Deutschland GmbH, Deutschland. Mesamoll^{®} besteht zu 75-85 % aus einem Gemisch sekundärer Alkylsulfonsäurephenylester und enthält zusätzlich 15-25 % sekundäre Alkylsulfonsäurediphenylester sowie 0,05-3 % nicht sulfierte Alkane. Die Alkylketten sind dabei überwiegend unverzweigt, mit Kettenlängen hauptsächlich im Bereich C13-C17.

Bevorzugt steht R⁴ für n-Nonyl, Isononyl, 3,5,5-Trimethylhexanyl, n-Decyl oder Isodecyl. Besonders bevorzugt steht R⁴ für Isononyl, Decyl oder Isodecyl, ganz besonders bevorzugt für 3,5,5-Trimethylhexanol-armes Isononanyl oder 3,5,5-Trimethylhexanyl.

In einer bevorzugten Ausführungsform steht R¹ für einen geradkettigen C10- bis C21-Alkylrest.

Die erfindungsgemäßen Weichmacherzubereitungen lassen sich durch Mischen der an sich bekannten Alkylsulfonsäureester der Komponente a) in dem angegebenen Verhältnis mit den Komponenten b) nach einem dem Fachmann bekannten Verfahren herstellen. Optional kann das Gemisch auch während der Herstellung des Kompoundmasse durch getrennte Dosierung in den Mischprozess erzeugt werden. Die Weichmacherzubereitungen werden durch die Zusammensetzung definiert, nicht durch die Art der Herstellung der Zubereitung.

Die Erfindung umfasst auch die Verwendung der erfindungsgemäßen Weichmacherzubereitungen alleine oder in Kombination mit anderen Weichmachern, nicht einschränkend auch Benzoesäureester, in Kunststoffen, bevorzugt Polyvinylchlorid, Vinylchlorid-basierte Copolymere, Polyvinylidenchlorid, Polyvinylacetale, Polyacrylate, Polyamide, Polyurethane, Polylactide, Polymilchsäuren, Cellulose oder ihre Derivate, Kautschukpolymere wie Acrylnitril-Butadien-Kautschuk, hydrierter Acrylnitril-Butadien-Kautschuk, Chloroprenkautschuk, chloriertes Polyethylen, Chlorsulfonylpolyethylen, Ethylen-Propylen-Kautschuk, Acrylatkautschuk und/oder Epichlorhydrinkautschuk. Besonders bevorzugt ist Polyvinylchlorid. Die Erfindung betrifft auch Kunststoffe, bevorzugt Polyvinylchlorid, Vinylchlorid-basierte Copolymere, Polyvinylidenchlorid, Polyvinylacetale, Polyacrylate, Polyamide, Polyurethane, Polylactide, Polymilchsäuren, Cellulose oder ihre Derivate, Kautschukpolymere wie Acrylnitril-Butadien-Kautschuk, hydrierter Acrylniril-Butadien-Kautschuk, Chloroprenkautschuk, chloriertes Polyethylen, Chlorsulfonylpolyethylen, Ethylen-Propylen-Kautschuk, Acrylatkautschuk und/oder Epichlorhydrinkautschuk, bevorzugt Polyvinylchlorid, dadurch gekennzeichnet, dass diese die Weichmacherzubereitung enthaltend
a) 5 - 95 Gew.-% eines Alkylsulfonsäurearylesters der Formel R¹-SO₂-O-R² und
b) 95-5 Gew.-% eines Benzoesäureesters mit einem einwertigen Alkohol der Formel R³-C(O)O-R⁴
wobei die Summe der Gewichtsprozente der Komponenten 100 % ergibt und worin
R¹ für einen geradkettigen oder verzweigten C10 bis C21-Alkylrest steht,
R² für einen gegebenenfalls mit C1- bis C4-Alkyl-substituierten Phenylrest steht,
R³ für einen Phenylrest steht und
R⁴ für einen geradkettigen oder verzweigten C9- und C10-Alkylrest steht.

Verfahren zur Herstellung von weichgemachtem Polyvinylchlorid sind bekannt, beispielsweise aus L. Meier: "5 Weichmacher", in Gächter/Müller (Herausgeber) Kunststoffadditive, 3. Ausgabe, S. 350 bis S. 367, Hanser Verlag 1989/1990. Der Alkylsulfonsäurearylester und der Benzoesäureester können in diesem Verfahren in Form der zuvor hergestellten Weichmacherzubereitung oder auch unabhängig voneinander in beliebiger Weise eingesetzt werden.

Als PVC-Typen kommen Suspensions-, Masse-, Mikrosuspensions- oder bevorzugt Emulsions-PVC in Frage. Die erfindungsgemäßen Weichmacherzubereitungen werden vorzugsweise zu 10 bis 200 Teilen auf 100 Teile Kunststoff, bevorzugt 20 bis 120 Teile auf 100 Teile Kunststoff, besonders bevorzugt 40 bis 100 Teile auf 100 Teile Kunststoff eingesetzt.

Die mittels der erfindungsgemäßen Weichmacherzubereitungen ausgestatteten Kunststoffe, insbesondere das Polyvinylchlorid, können neben den erfindungsgemäßen Weichmacherzubereitungen auch noch andere, geeignete Zusatzstoffe enthalten. Beispiele hierfür sind weitere Weichmacher, Stabilisatoren, Antioxidantien, Gleitmittel, Füllstoffe, Pigmente, Flammschutzmittel, Lichtstabilisatoren, Treibmittel, Kicker, polymere Verarbeitungshilfsmittel, Schlagzähverbesserer, optische Aufheller, Antistatika oder Biostabilisatoren.

Bevorzugt werden die erfindungsgemäßen Gemische zur Herstellung von Plastisolen, bevorzugt von Plastisolen auf Basis von PVC, eingesetzt.

Bevorzugte Endprodukte aus den erfindungsgemäß mit der Weichmacherzubereitung versetzten Kunststoffen sind Fußböden, Tapeten, Kunstleder, Beschichtungen, Lacke, Farben, Klebstoffe, Dichtstoffe, Klebstoffkomponenten oder Dichtstoffkomponenten. Die vorliegende Erfindung betrifft deshalb auch die Verwendung der erfindungsgemäßen Weichmacherzubereitungen in den genannten Endprodukten.

Die erfindungsgemäßen Weichmacherzubereitungen sind wegen ihrer kurzen Gelierzeit überraschend schnell und gut verarbeitbar.

Die erfindungsgemäßen Weichmacherzubereitungen werden durch die nachfolgenden, den Erfindungsbereich nicht einschränkenden Beispiele erläutert.

### Bestimmung der Lösetemperatur:

48,0 g der zu prüfenden Substanz wurden in ein Becherglas mit Magnetrührstab und Thermometer eingewogen. Das Becherglas wurde auf einen Magnetheizrührer in eine Halterung zwischen eine Lampe und eine Photozelle gesetzt. Über eine Photozelle wurde die Änderung in der Lichtdurchlässigkeit der Probe registriert. Dann wurden 2 g Polyvinylchlorid (Vinnolit^{®} S4170; Vinnolit GmbH & Co. KG, Deutschland) und mittels Pipette 2 Tropfen PVC-Stabilisator (Organozinnstabilisator) zugesetzt. Das Polyvinylchlorid wurde in den Weichmacher eingerührt und unter Rühren zügig mit 5-8°C pro Minute auf 100°C aufgeheizt und anschließend mit durchschnittlich 3°C pro Minute weiter aufgeheizt. Die Lösetemperatur galt als erreicht, wenn 3 Minuten hintereinander keinerlei Anstieg des Durchlässigkeitswertes durch die Photozelle mehr registriert wurde und das Polyvinylchlorid gelöst war. Bei Erreichen der Temperatur des Becherglasinhaltes von 200°C wurde die Messung abgebrochen. Eine niedrige Lösetemperatur von unter 135°C zeigte eine gute Verträglichkeit des Weichmachers und der Weichmacherzubereitungen mit Polyvinylchlorid an.

### Bestimmung der Gelierzeit:

Die Gelierzeit wurde aus zeitabhängigen Viskositätsmessungen ermittelt. Dabei wurde die Scherviskosität eines Plastisols mittels eines Platte-Platte-Rotationsviskosimeters (Physika MC 120, Anton Paar Germany GmbH, Deutschland) zeitabhängig während Lagerung bei erhöhter Temperatur gemessen. Je nach Geliergeschwindigkeit des Weichmachers liegt die erhöhte Temperatur bevorzugt im Bereich von 50°C bis 150°C (Endwerte eingeschlossen). Um vergleichbare Aussagen zur Gelierzeit zu erhalten, wurde die Viskosität bei einer Lagertemperatur von 70°C nach 120 Sekunden und 240 Sekunden bzw. bei 80°C Lagertemperatur nach 60 Sekunden und 90 Sekunden notiert. Hohe Viskositäten und schnelles Gelieren indizieren eine hohe Geliergeschwindigkeit.

Zur Herstellung des Plastisols wurden 100 Gew.-% Polyvinylchlorid (Vestolit^{®} B 7021 Ultra, Vestolit GmbH & Co. KG, Deutschland) mit 60 Gew.-% Weichmacher bzw. Weichmacherzubereitung und 3 Gew.-% PVC-Stabilisator (Ca/Zn-Carboxylat) in einem Pastenevakuiergerät (Mathis LPE, Werner Mathis AG, Schweiz) für 5 Minuten verrührt und vor dem Versuch zur Bestimmung der Gelierzeit für 24 Stunden bei 20°C gereift.

Vestolit^{®} B 7021 Ultra ist ein verpastbares homopolymeres Mikro-S-PVC, welches zur Herstellung von niedrigviskosen Pasten mit annähernd newtonschem Fließverhalten geeignet ist.

Das Produkt ist aufgrund seiner Eigenschaften universell verwendbar für kompakte und geschäumte Beschichtungen aller Art sowie für Tauch- und Gießverfahren.

Vestolit^{®} B 7021 Ultra ist überall dort verwendbar, wo niedrige Viskosität, gute Lagerbeständigkeit und geringe Wasseraufnahme gefordert werden. Das Produkt eignet sich besonders für Rotations-, Tauch- und Gießverfahren. Das Produkt eignet sich zudem für den chemischen Schaum in Kunstledern und Fußbodenbelägen. Bei der Herstellung von CV-Belägen führt die gute Kontaktgelierbarkeit zu glatten Oberflächen bei der Glasvliesimprägnierung. Vestolit^{®} B 7021 Ultra kann darüber hinaus bei der mechanischen Verschäumung sowohl mit Seifen- als auch mit Silikonstabilisatoren verarbeitet werden (siehe Produktinformation Vestolit^{®} B 7021 Ultra vom 06-04-12 (12. April 2006).

### Beispiele

In den Beispielen wird die Lösetemperatur der einzelnen Weichmacher und der Weichmacherzubereitungen zum Nachweis der Verträglichkeit der Weichmacher mit den Kunststoffen oder Polymeren, hier PVC, gelistet. Eine niedrige Lösetemperatur von unter 135°C zeigt eine gute Verträglichkeit des Weichmachers und der Weichmacherzubereitungen mit Polyvinylchlorid an.

Um vergleichbare Aussagen zur Gelierzeit zu erhalten, wurde die Viskosität bei einer konstanten Lagertemperatur nach festen Lagerzeiten notiert. Hohe Viskositäten und Gelieren indizieren eine hohe Geliergeschwindigkeit.

**Tabelle 1**

| **Beispiel** | **1*** | **2** | **3** | **4** | **5*** |
|---|---|---|---|---|---|
| Mesamoll^{®1)} | 0% | 33 % | 50% | 67 % | 100 % |
| 3,5,5-Trimethylhexylbenzoat | 100 % | 67 % | 50% | 33 % | 0% |
| Lösetemperatur [°C] | 129 | 125 | 124 | 124 | 120 |
| Pastenviskosität (Pas) nach Lagerung | | | | | |
| 70°C / 120 Sekunden Verweilzeit | 15,7 | 24,7 | 24,4 | 19,4 | 14,5 |
| 70°C / 240 Sekunden Verweilzeit | 88,8 | 240,0 | 293,0 | 258,0 | 155,0 |
| 80°C / 60 Sekunden Verweilzeit | 22,8 | 75,4 | 47,9 | 39,4 | 34,4 |
| 80°C / 90 Sekunden Verweilzeit | 166,0 | 787,0 | 595,0 | 524,0 | 440,0 |

| | | | | | |
|---|---|---|---|---|---|
| ¹⁾ Produkt Mesamoll^{®} der Lanxess Deutschland GmbH, Deutschland, CAS-Nummer 91082-17-6 | | | | | |

**Tabelle 2**

| **Beispiel** | **6*** | **7** | **8** | **9** | **5*** |
|---|---|---|---|---|---|
| Mesamoll^{®} | 0% | 33 % | 50% | 67 % | 100 % |
| Isononylbenzoat²⁾ | 100 % | 67 % | 50% | 33 % | 0% |
| Lösetemperatur [°C] | 127 | 122 | 122 | 122 | 120 |
| Pastenviskosität (Pas) nach Lagerung | | | | | |
| 70°C / 120 Sekunden Verweilzeit | 48,3 | 279,0 | 234,0 | 121,0 | 14,5 |
| 70°C / 240 Sekunden Verweilzeit | 791,0 | fest | fest | fest | 155,0 |
| 80°C / 60 Sekunden Verweilzeit | 296,0 | 684,0 | fest | 372,0 | 34,4 |
| 80°C / 90 Sekunden Verweilzeit | fest | fest | fest | fest | 440,0 |

| | | | | | |
|---|---|---|---|---|---|
| ²⁾ Produkt Vestinol^{®} INB der OXENO Olefinchemie GmbH, Deutschland, CAS-Nummer 670241-72-2. | | | | | |

**Tabelle 3**

| **Beispiel** | **Mesamoll**^{®} | **Decylbenzoat** | **Isodecylbenzoat**³⁾ | **Lösetemperatur [°C]** | **Viskosität (Pas) 70°C/120 s** |
|---|---|---|---|---|---|
| 10* | 0% | 100 % | 0% | 137 | 11,4 |
| 11 | 33 % | 67 % | 0% | 128 | 30,9 |
| 12 | 50% | 50% | 0% | 123 | 35,3 |
| 13 | 67 % | 33 % | 0% | 123 | 30,6 |
| 5* | 100 % | 0% | 0% | 120 | 14,5 |
| 14* | 0% | 0% | 100 % | 133 | 9,6 |
| 15 | 33 % | 0% | 67 % | 127 | 20,3 |
| 16 | 50% | 0% | 50% | 123 | 24,8 |
| 17 | 67 % | 0% | 33 % | 122 | 20,4 |

| | | | | | |
|---|---|---|---|---|---|
| ³⁾ Produkt Benzoflex^{®} 131 der Genovique Specialties Corporation, USA, CAS-Nummer 131298-44-7. | | | | | |

Aus den Beispielen geht hervor, dass die Viskositäten der Plastisole auf Basis der erfindungsgemäßen Weichmacherzubereitungen nach Thermolagerung über einen festgelegten Zeitraum überraschend höher sind, als die der Einzelkomponenten und als die Linearbeziehung der Einzelkomponenten erwarten ließe. Gleichzeitig wird festgestellt, dass der Anstieg der Viskosität über die Zeit schneller von statten geht. Somit wird überraschenderweise durch den Einsatz der erfindungsgemäßen Weichmacherzubereitungen eine Verkürzung der Gelierzeit erreicht.

In den Tabellen 4 und 5 sind Vergleichsbeispiele mit nicht erfindungsgemäßen, phthalatfreien und mit PVC verträglichen Weichmacherzubereitungen enthaltend den Alkylsulfonsäurearylester (Mesamoll^{®} der Lanxess Deutschland GmbH) und Benzoesäureester mit einwertigen Alkoholen mit kürzeren (C8) und längeren (C12) Alkylresten aufgeführt. Hier liegen die Viskositäten der Pasten nach Thermolagerung über einen bestimmten Zeitraum und der Anstieg der Viskositäten der Pasten über die Zeit der Weichmacherzubereitungen zwischen den Ergebnissen der Einzelkomponenten. Die niedrige Lösetemperatur in PVC von unter 135°C zeigt an, dass diese Gemische, wie generell Weichmachermischungen auf Basis von Benzoesäureestern einwertiger Alkohole und Arylestern der Alkansulfonsäuren, in jedem Verhältnis ebenfalls als Weichmacher von Kunststoffen, insbesondere von PVC, eingesetzt werden können.

### Vergleichsbeispiele:

**Tabelle 4**

| | **18*** | **V1*** | **V2*** | **V3*** | **5*** |
|---|---|---|---|---|---|
| Mesamoll^{®} | 0% | 33 % | 50% | 67 % | 100 % |
| Ethylhexylbenzoat | 100 % | 67 % | 50% | 33 % | 0% |
| Lösetemperatur [°C] | 121 | 119 | 119 | 119 | 120 |
| Pastenviskosität (Pas) nach Lagerung | | | | | |
| 70°C / 120 Sekunden Verweilzeit | 1.000,0 | 681,0 | 438,0 | 169,0 | 14,5 |
| 70°C / 240 Sekunden Verweilzeit | fest | fest | fest | fest | 155,0 |
| 80°C / 60 Sekunden Verweilzeit | 2.550,0 | 900,0 | 559,0 | 314,0 | 34,4 |
| 80°C / 90 Sekunden Verweilzeit | fest | fest | fest | fest | 440,0 |

**Tabelle 5**

| | **19*** | **V4*** | **V5*** | **V6*** | **5*** |
|---|---|---|---|---|---|
| Mesamoll^{®} | 0% | 33 % | 50% | 67 % | 100 % |
| Dodecylbenzoat | 100 % | 67 % | 50% | 33 % | 0% |
| Lösetemperatur [°C] | 149 | 134 | 129 | 127 | 120 |
| Pastenviskosität (Pas) nach Lagerung | | | | | |
| 70°C / 120 Sekunden Verweilzeit | 1,7 | 5,2 | 7,9 | 10,6 | 14,5 |
| 70°C / 240 Sekunden Verweilzeit | 3,3 | 17,5 | 39,9 | 74,7 | 155,0 |
| 80°C / 60 Sekunden Verweilzeit | 1,8 | 9,4 | 14,1 | 20,0 | 34,4 |
| 80°C / 90 Sekunden Verweilzeit | 5,6 | 31,2 | 77,8 | 166,0 | 444,0 |

## Patentansprüche

1. Phthalatfreie Weichmacherzubereitungen, enthaltend
a) 5-95 Gew.-% eines Alkylsulfonsäurearylesters der Formel R¹-SO₂-O-R² und
b) 95-5 Gew.-% eines Benzoesäureesters mit einem einwertigen Alkohol der Formel R³-C(O)O-R⁴, wobei die Summe der Gewichtsprozente der Komponenten 100 % ergibt und worin
R¹ für einen geradkettigen oder verzweigten C10- bis C21-Alkylrest steht,
R² für einen gegebenenfalls mit C1- bis C4-Alkyl-substituierten Phenylrest steht,
R³ für einen Phenylrest steht und
R⁴ für einen geradkettigen oder verzweigten C9- und C 10-Alkylrest steht.

2. Phthalatfreie Weichmacherzubereitungen gemäß Anspruch 1, **dadurch gekennzeichnet, dass** der Rest R¹ für einen geradkettigen C 10 bis C21-Alkylrest steht.

3. Phthalatfreie Weichmacherzubereitungen gemäß einem der Ansprüche 1 und 2, **dadurch gekennzeichnet, dass** der Rest R² für einen unsubstituierten Phenylrest steht.

4. Phthalatfreie Weichmacherzubereitungen gemäß einem der Ansprüche 1 bis 3, **dadurch gekennzeichnet, dass** R⁴ für n-Nonyl, Isononyl, 3,5,5-Trimethylhexanyl, n-Decyl, oder Isodecyl steht.

5. Phthalatfreie Weichmacherzubereitungen gemäß einem der Anspruche 1 bis 4, **dadurch gekennzeichnet, dass** die Komponente b) für ein Benzoesäureestergemisch auf Basis von zwei oder mehreren Komponenten mit R⁴ für n-Nonyl, Isononyl, 3,5,5-Trimethylhexanyl, n-Decyl, oder Isodecyl steht.

6. Phthalatfreie Weichmacherzubereitungen gemäß einem der Ansprüche 1 bis 5, **dadurch gekennzeichnet, dass** der Gehalt des als Komponente a) einzusetzenden Alkylsulfonsäureesters zwischen 20 und 80 Gew.%, bevorzugt zwischen 33 und 67 Gew.-%, ganz besonders bevorzugt zwischen 51 und 65 Gew.-% liegt.

7. Verwendung der Weichmacherzubereitungen nach einem der Ansprüche 1 bis 6 als Weichmacher in Kunststoffen.

8. Verwendung nach Anspruch 7, **dadurch gekennzeichnet, dass** der Kunststoff PVC ist.

9. Verwendung nach Anspruch 8, **dadurch gekennzeichnet, dass** es sich um ein PVC Plastisol handelt.

10. Kunststoffe, bevorzugt PVC, enthaltend eine Weichmacherzubereitung gemäß Anspruch 1.

11. Verwendung der Weichmacherzubereitung gemäß einem der Ansprüche 1 bis 6 in Farben und Lacken, in Klebstoffen, Dichtstoffen oder Klebstoff- und Dichtstoffkomponenten.

## Claims

1. Phthalate-free plasticizer preparations comprising
a) from 5 to 95% by weight of an aryl alkylsulphonate of the formula R¹-SO₂-O-R² and
b) from 95 to 5% by weight of a benzoic ester with a monohydric alcohol of the formula R³-C(O)O-R⁴, where the total of the percentages by weight of the components is 100% and where
R¹ is a straight-chain or branched C10- to C21-alkyl moiety,
R² is an optionally C1- to C4-alkylsubstituted phenyl moiety,
R³ is a phenyl moiety and
R⁴ is a straight-chain or branched C9- or C10-alkyl moiety.

2. Phthalate-free plasticizer preparations according to Claim 1, **characterized in that** the moiety R¹ is a straight-chain C10- to C21-alkyl moiety.

3. Phthalate-free plasticizer preparations according to Claim 1 or 2, **characterized in that** the moiety R² is an unsubstituted phenyl moiety.

4. Phthalate-free plasticizer preparations according to any of Claims 1 to 3, **characterized in that** R⁴ is n-nonyl, isononyl, 3,5,5-trimethylhexanyl, n-decyl, or isodecyl.

5. Phthalate-free plasticizer preparations according to any of Claims 1 to 4, **characterized in that** component b) is a benzoic ester mixture based on two or more components where R⁴ is n-nonyl, isononyl, 3,5,5-trimethylhexanyl, n-decyl, or isodecyl.

6. Phthalate-free plasticizer preparations according to any of Claims 1 to 5, **characterized in that** the content of the alkylsulphonic ester to be used as component a) is from 20 to 80% by weight, preferably from 33 to 67% by weight, very particularly preferably from 51 to 65% by weight.

7. Use of the plasticizer preparations according to any of Claims 1 to 6 as plasticizer in plastics.

8. Use according to Claim 7, **characterized in that** the plastic is PVC.

9. Use according to Claim 8, **characterized in that** a PVC plastisol is involved.

10. Plastics, preferably PVC, comprising a plasticizer preparation according to Claim 1.

11. Use of the plasticizer preparation according to any of Claims 1 to 6 in inks, paints and other coatings, in adhesives, in sealants or in adhesive components and sealant components.

## Revendications

1. Préparations de plastifiant exemptes de phtalate, contenant
a) 5-95% en poids d'un ester arylique de l'acide alkylsulfonique de formule R¹-SO₂-O-R² et
b) 95-5% en poids d'un ester de l'acide benzoïque avec un alcool monovalent de formule R³-C(O)O-R⁴, la somme des pourcentages en poids des composants valant 100% et où
R¹ représente un radical C₁₀-C₂₁-alkyle linéaire ou ramifié,
R² représente un radical phényle le cas échéant substitué par C₁-C₄-alkyle,
R³ représente un radical phényle et
R⁴ représente un radical C₉-C₁₀-alkyle linéaire ou ramifié.

2. Préparations de plastifiant exemptes de phtalate selon la revendication 1, **caractérisées en ce que** le radical R¹ représente un radical C₁₀-C₂₁-alkyle linéaire.

3. Préparations de plastifiant exemptes de phtalate selon l'une quelconque des revendications 1 et 2, **caractérisées en ce que** le radical R² représente un radical phényle non substitué.

4. Préparations de plastifiant exemptes de phtalate selon l'une quelconque des revendications 1 à 3, **caractérisées en ce que** R⁴ représente n-nonyle, isononyle, 3,5,5-triméthylhexanyle, n-décyle ou isodécyle.

5. Préparations de plastifiant exemptes de phtalate selon l'une quelconque des revendications 1 à 4, **caractérisées en ce que** le composant b) représente un mélange d'esters de l'acide benzoïque à base de deux composants ou plus, R⁴ représentant n-nonyle, isononyle, 3,5,5-triméthylhexanyle, n-décyle ou isodécyle.

6. Préparations de plastifiant exemptes de phtalate selon l'une quelconque des revendications 1 à 5, **caractérisées en ce que** la teneur en ester de l'acide alkylsulfonique à utiliser comme composant a) est située entre 20 et 80% en poids, de préférence entre 33 et 67% en poids, de manière tout particulièrement préférée entre 51 et 65% en poids.

7. Utilisation des préparations de plastifiant selon l'une quelconque des revendications 1 à 6 comme plastifiant dans des matériaux synthétiques.

8. Utilisation selon la revendication 7, **caractérisée en ce que** le matériau synthétique est le PVC.

9. Utilisation selon la revendication 8, **caractérisée en ce qu'**il s'agit d'un PVC plastisol.

10. Matériaux synthétiques, de préférence PVC, contenant une préparation de plastifiant selon la revendication 1.

11. Utilisation de la préparation de plastifiant selon l'une quelconque des revendications 1 à 6 dans des encres et des laques, dans des adhésifs, dans des matériaux d'étanchéité ou dans des composants d'adhésifs et de matériaux d'étanchéité.
